(19) Europäisches Patentamt
European Patent Office
Office européen des brevets

(11) **EP 2 543 629 A1**

(12) **EUROPEAN PATENT APPLICATION**
published in accordance with Art. 153(4) EPC

(43) Date of publication:
**09.01.2013 Bulletin 2013/02**

(21) Application number: **11765433.5**

(22) Date of filing: **25.03.2011**

(51) Int Cl.:
***C01B 13/32*** *(2006.01)* ***H01L 21/316*** *(2006.01)*

(86) International application number:
**PCT/JP2011/057278**

(87) International publication number:
**WO 2011/125532 (13.10.2011 Gazette 2011/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.07.2010 JP 2010158297**
**31.03.2010 JP 2010084523**

(71) Applicant: **Central Glass Company, Limited**
**Yamaguchi 755-0001 (JP)**

(72) Inventors:
- **TAKAHASHI, Masahide**
  **Osaka 599-8531 (JP)**
- **IHARA, Rie**
  **Osaka 599-8531 (JP)**

(74) Representative: **Manitz, Finsterwald & Partner GbR**
**Martin-Greif-Strasse 1**
**80336 München (DE)**

(54) **MOLDED OXIDE AND PROCESS FOR PRODUCING SAME**

(57) A molded oxide product of the present invention contains an oxide region and an organic cross-linked region and has at least a surface layer formed of an inorganic glassy material. The molded oxide product can combine both organic and inorganic advantages such as good workability of organic materials and high weather resistance, heat resistance and hardness of inorganic materials. The molded oxide product can be produced through the following steps: step A for preparing a precursor $R^2$-M-O-M' having a polymerizable functional group-containing organic group $R^2$ and a M-O-M' bond; step B for applying an application liquid containing the precursor; step C for hardening the application liquid by photocuring and/or thermosetting; and step D for performing oxidation treatment on at least a surface layer of the hardened product in such a manner as to convert at least the surface layer of the hardened product to be of inorganic glassy material.

Fig. 3

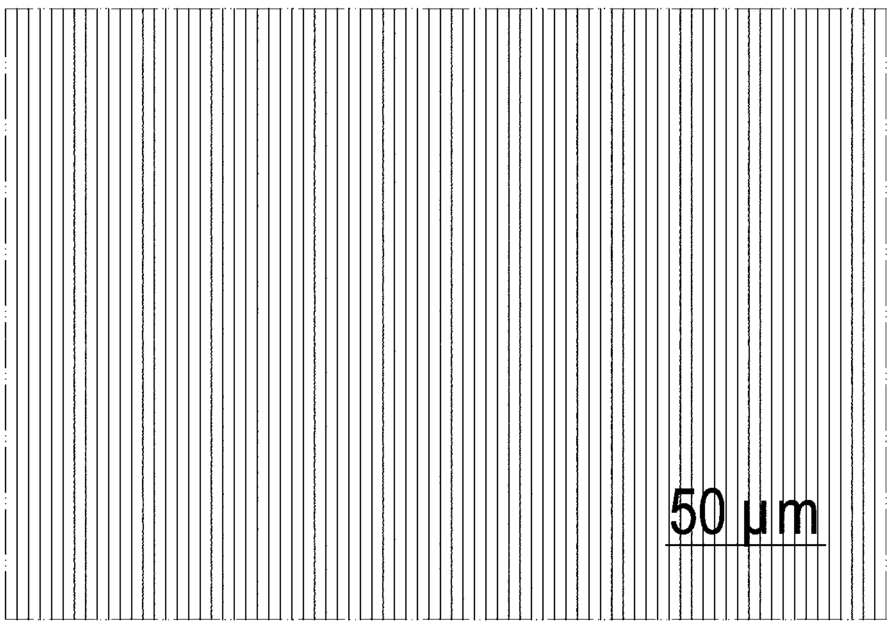


EP 2 543 629 A1

## Description

### Technical Field

The present invention relates to a molded oxide product and a process for producing the molded oxide product.

### Background Art

Organic polymer materials typified by methacrylate resins (polymethylmethacrylate: PMMA) called acrylic resins obtain improvements in various characteristics, such as scratch resistance, abrasion resistance, UV resistance, weather resistance, gas permeability and dielectric properties, required depending on the purposes of use by control of molecular weight, cross-linking density and the like. It is feasible to apply the organic polymer materials to various processes such as three-dimensional shaping by molding and fine processing by lithography due to the fact that the organic polymer materials undergo thermosetting or photocuring under relatively low temperature conditions.

On the other hand, inorganic materials such as glass have high weather resistance, heat resistance and surface hardness.

Further, Patent Documents 4 and 5 disclose organic-inorganic hybrid glass materials having higher light resistance than those of organic polymer materials and capable of being softened at lower temperatures than inorganic glass materials.

### Prior Art Documents

### Patent Documents

Patent Document 1: Japanese Laid-Open Patent Publication No. 2000-194142
Patent Document 2: Japanese Laid-Open Patent Publication No. 2002-270540
Patent Document 3: Japanese Laid-Open Patent Publication No. 2004-71934
Patent Document 4: Japanese Patent No. 4046963
Patent Document 5: Japanese Patent No. 3910101

### Disclosure of the Invention

### Problems to be Solved by the Invention

There is no denying that the organic polymer materials are inferior to the inorganic materials in terms of heat resistance and hardness. The organic-inorganic hybrid glass materials may not have sufficient hardness as compared with the inorganic materials. There is often a difficulty in fine processing of the inorganic materials as the molding temperatures of the inorganic materials are generally higher than those of the organic polymer materials and organic-inorganic hybrid glass materials. It has thus been demanded to develop materials that combine workability with actual-use durability.

The present invention has been made in view of the above circumstances. It is accordingly an object of the present invention to provide a molded product that combines both organic and inorganic advantages, such as good workability offered by organic materials and high weather resistance, heat resistance and hardness offered by inorganic materials, and a process for producing the molded product.

### Means for Solvent the Problems

As a result of extensive researches, the present inventors have found that it is possible that, when a molded product containing an oxide region and an organic cross-linked region is subjected to oxidation treatment in such a manner that at least a surface layer of the molded product is formed of an inorganic glassy material, the resulting molded product can combine good workability of organic materials with high weather resistance, heat resistance and hardness of inorganic materials. The present invention is based on such a finding.

Namely, there is provided according to a first aspect of the present invention a molded oxide product comprising an oxide region and an organic cross-linked region and having at least a surface layer thereof formed of an inorganic glassy material.

There is provided according to a second aspect of the present invention a process for producing a molded

oxide product, the molding oxide product containing an oxide region and an organic cross-linked region and having at least a surface layer thereof formed of an inorganic glassy material, the process comprising the following steps A to D: step A for preparing a precursor $R^2$-M-O-M', which has a polymerizable functional group-containing organic group $R^2$ and a M-O-M' bond, by elementary reaction of raw material compounds $R^2$-M-Y and M'-OH where $R^2$ is an organic group containing a polymerizable functional group; Y is an alkoxy group containing $C_1$-$C_{20}$ hydrocarbon or a halogen group; and M and M' are each independently at least one kind of element selected from the group consisting of aluminum, silicon, germanium, indium, tin, lead, phosphorus, boron, gallium, lithium, sodium, potassium, rubidium, cesium, beryllium, magnesium, calcium, strontium, barium, neodymium, praseodymium, erbium, cerium, titanium, zirconium, tantalum, zinc, tungsten, vanadium, chromium, manganese, iron, cobalt, nickel, copper and molybdenum; step B for applying an application liquid containing therein the precursor; step C for hardening the application liquid by thermosetting or photocuring, thereby forming a hardened product; and step D for performing oxidation treatment on at least a surface layer of the hardened product in such a manner as to convert at least the surface layer of the hardened product to be of an inorganic glassy material.

## Brief Description of the Drawing

FIG. 1 is a transmittance spectrum of a molded oxide product of Example 1.
FIG. 2 is an electron micrograph of a molded oxide product of Example 2.
FIG. 3 is an electron micrograph of a molded oxide product of Example 3.

## Detailed Description of Embodiments

Hereinafter, the present invention will be described in detail. It should be noted that: the present invention is not limited to the following description; and various modifications and variations can be made without departing from the scope of the present invention.

A molded oxide product of the present invention contains an oxide region and an organic cross-linked region and has at least a surface layer formed of an inorganic glassy material. It is possible that the present molded oxide product can exhibit high weather resistance, scratch resistance, abrasion resistance and heat resistance.

In the present invention, the term "molded oxide product" refers to a bulk-, plate-, film- or fiber-shaped product containing an oxide region and an organic cross-linked region and having at least a surface layer thereof formed of an inorganic glassy material, a product containing an oxide region and an organic cross-linked region and having at least a surface layer or the whole thereof formed of an inorganic glassy material, or a product adhered to a substrate and having a surface layer thereof formed of an inorganic glassy material. In the present specification, the term "molded oxide product" may simply be referred to as "molded product"; and the product having its surface layer formed of the inorganic glassy material and adhered to the substrate may simply be referred to as "coating".

The oxide region has a M-O-M' bond in which elements M and M' are bonded together via an oxygen atom, where M and M' are each independently at least one kind of element selected from the group consisting of aluminum, silicon, germanium, indium, tin, lead, phosphorus, boron, gallium, lithium, sodium, potassium, rubidium, cesium, beryllium, magnesium, calcium, strontium, barium, neodymium, praseodymium, erbium, cerium, titanium, zirconium, tantalum, zinc, tungsten, vanadium, chromium, manganese, iron, cobalt, nickel, copper and molybdenum.

In terms of the heat resistance and weather resistance of the inorganic glassy material, silicon, boron, titanium, zirconium and zinc are preferred as M and M'. An alkali metal element or an alkaline-earth metal element may be contained as M, M' for property control of the inorganic glassy material. Further, a rare earth element or a transition metal element may also be contained as M, M' in order to color the inorganic glassy material or to provide the inorganic glassy material with another function such as a light absorption function in a specific wavelength range.

For example, the organic cross-linked region has a structure represented by the following general formula [1] and has at least two ends thereof bonded to the elements M and M', respectively,

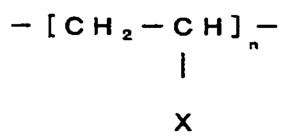

[1]

where X is at least one selected from the group consisting of a hydrogen atom, a OH group, a (C=O)-$R^1$ group, a (C=O)-O$R^1$ group and a phenyl group; $R^1$ is a $C_1$-$C_{20}$ hydrocarbon group; and *n* is an integer of 1 or greater.

It is preferable to select an hydrogen atom, a OH group or a (C=O)-$R^1$ group as X in order to shorten the time of the treatment for converting at least the surface layer of the molded product to be of the inorganic glassy material.

Examples of the inorganic glassy material are those having an oxo bond represented by M-O-M', M-O-M or M'-O-M'. It is preferable that, in the bond represented by M-O-M', M-O-M or M'-O-M', M and M' are each independently at least one kind of element selected from the group consisting of aluminum, silicon, germanium, indium, tin, lead, phosphorus, boron, gallium, lithium, sodium, potassium, rubidium, cesium, beryllium, magnesium, calcium, strontium, barium, neodymium, praseodymium, erbium, cerium, titanium, zirconium, tantalum, zinc, tungsten, vanadium, chromium, manganese, iron, cobalt, nickel, copper and molybdenum.

In terms of the heat resistance and weather resistance of the inorganic glassy material, silicon, boron, titanium, zirconium and zinc are preferred as M and M'. An alkali metal element or an alkaline-earth metal element may be added as M, M' for property control of the inorganic glassy material. It is possible by the addition of the alkali metal element or alkaline-earth metal element to, for example, control the softening temperature, glass transition temperature, thermal expansion coefficient and chemical resistance of the inorganic glassy material. Further, a rare earth element or a transition metal element may also be added as M, M' in order to color the inorganic glassy material or provide the inorganic glassy material with another function such as a light absorption function in a specific wavelength range. It is possible by the addition of the rare earth element or transition metal element to provide the inorganic glassy material with, for example, fluorescence properties, laser transmission properties, magnetic properties etc.

Preferably, the layer of the inorganic glassy material has a thickness of 50 nm to 10 $\mu$m from the surface of the molded oxide product. If the thickness of the layer of the inorganic glassy material is less than 50 nm, there is an unfavorable tendency that sufficient hardness cannot be imparted to the surface of the molded product. If the thickness of the layer of the inorganic glassy material exceeds 10 $\mu$m, cracks are unfavorably likely to occur in the layer of the inorganic glassy material. The thickness of the layer of the inorganic glassy material is more preferably 100 nm to 5 $\mu$m, still more preferably 200 nm to 1 $\mu$m.

Further, the molded oxide product of the present invention preferably has a fine structure. The fine structure may be formed at the surface of the molded product or may be formed inside the molded product. By the formation of the fine structure, it is possible to provide the molded oxide product with another function such as low reflectance, water repellency or oil repellency. In order to impart such a function, the fine structure is preferably 100 nm or more in dimension. The dimension of the fine structure is more preferably 100 nm to 200 $\mu$m. Further, the in-plane dimension error of the fine structure is preferably 20 nm or less, more preferably 10 nm or less.

In the case where the molded product is in the form of a coating with a thickness of 10 $\mu$m or less, the whole of the coating may be of the inorganic glassy material. When the thickness is in the above range, it is possible to improve the durability of the coating without impairing the fine structure fixed by fine processing on the coating.

There is no particular limitation on the form of the molded oxide product in the present invention. One preferred example of the molded oxide product is a thin film-shaped molded oxide product in which the oxide region is a composite oxide region (hereinafter referred to as "composite oxide film"). The composite oxide film can exhibit particularly high weather resistance, scratch/abrasion resistance and light transmittance.

As the composite oxide region of the composite oxide film, there can preferably be used those having a M-O-M' bond in which elements M and M' are bonded together via an oxygen atom, where the element M is at least one selected from the group consisting of titanium, zirconium, aluminum, silicon, germanium, indium, tin, tantalum, zinc, tungsten and lead; and the element M' is at least one kind of Group-13 element selected from the group consisting of boron, aluminum, gallium and indium. In terms of the transparency of the film, it is particularly preferable that the composite oxide region has a Si-O-B bond where the element M is silicon and the element M' is boron.

Examples of the inorganic glassy material of the composite oxide film are those having at least one of M-O-M', M-O-M or M'-O-M', where the element M is at least one selected from the group consisting of titanium, zirconium, aluminum, silicon, germanium, indium, tin, tantalum, zinc, tungsten and lead; and the element M' is at least one kind of Group-13 element selected from the group consisting of boron, aluminum, gallium and indium. In terms of the transparency of the film, it is particularly preferable that the inorganic glassy material has at least one of a Si-O-B bond, a Si-O-Si bond and a B-O-B bond.

A production process of the molded oxide product of the present invention includes the following steps A to D:

step A for preparing a precursor $R^2$-M-O-M', which has a polymerizable functional group-containing organic group $R^2$ and a M-O-M' bond, by elementary reaction represented by the reaction formula [2]

$$R^2\text{-M-Y} + \text{M'-OH} \rightarrow R^2\text{-M-O-M'} + \text{Y - H} \uparrow \qquad [2]$$

where $R^2$ is an organic group containing a polymerizable functional group; Y is an alkoxy group containing $C_1$-$C_{20}$ hydrocarbon or a halogen group; and M and M' are each independently at least one kind of element selected from the group consisting of aluminum, silicon, germanium, indium, tin, lead, phosphorus, boron, gallium, lithium, sodium,

potassium, rubidium, cesium, beryllium, magnesium, calcium, strontium, barium, neodymium, praseodymium, erbium, cerium, titanium, zirconium, tantalum, zinc, tungsten, vanadium, chromium, manganese, iron, cobalt, nickel, copper and molybdenum;
step B for applying an application liquid containing therein the precursor;
step C for hardening the application liquid by thermosetting or photocuring, thereby forming a hardened product; and
step D for performing oxidation treatment on at least a surface layer of the hardened product in such a manner as to convert at least the surface layer of the hardened product to be of inorganic glassy material.

In the step A, the raw material compound $R^2$-M-Y used in the elementary reaction of the reaction formula [2] is an alkoxide or halide of the element M as represented by the following formula [3].

$$R^2{}_m M\ (Y)_{s-m} \qquad [3]$$

In the formula [3], $R^2$ is an organic group containing a polymerizable functional group; Y is an alkoxy group containing $C_1$-$C_{20}$ hydrocarbon or a halogen atom; M is at least one kind of element selected from the group consisting of aluminum, silicon, germanium, indium, tin, lead, phosphorus, boron, gallium, lithium, sodium, potassium, rubidium, cesium, beryllium, magnesium, calcium, strontium, barium, neodymium, praseodymium, erbium, cerium, titanium, zirconium, tantalum, zinc, tungsten, vanadium, chromium, manganese, iron, cobalt, nickel, copper and molybdenum; s is a valence of the element M; and *m* is 0 or a positive integer given by (s-1). In the case of forming the composite oxide film, Y is an alkoxy group; and M is at least one kind selected from the group consisting of titanium, zirconium, aluminum, silicon, germanium, indium, tin, tantalum, zinc, tungsten and lead in the formula [3].

When the formula [3] represents an alkoxide, Y is an alkoxy group. The hydrocarbon of the alkoxy group is preferably of 20 carbons or less so that an alcohol compound Y-H generated as a by-product in the reaction formula [2] is readily volatile and thus can be easily removed from the reaction system. The hydrocarbon is more preferably of 10 carbons or less, still more preferably 4 carbons or less. Further, the hydrocarbon may contain a halogen atom or an unsaturated hydrocarbon group in addition to carbon and hydrogen atoms.

When the formula [3] represents a halide, Y is a halogen atom. Examples of the halogen atom are fluorine, chlorine, bromine and iodine. In terms of the safety and ease of reaction control, the halide is preferably a chloride of titanium, zirconium, aluminum, silicon, germanium, indium, tin, tantalum, zinc, tungsten or lead.

In the step A, the raw material compound M'-OH used in the elementary reaction of the reaction formula [2] is a hydroxide of the element M' as represented by the following formula [4].

$$M'\ (OH)_{t-u} \qquad [4]$$

In the formula [4], M' is at least one kind of element selected from the group consisting of aluminum, silicon, germanium, indium, tin, lead, phosphorus, boron, gallium, lithium, sodium, potassium, rubidium, cesium, beryllium, magnesium, calcium, strontium, barium, neodymium, praseodymium, erbium, cerium, titanium, zirconium, tantalum, zinc, tungsten, vanadium, chromium, manganese, iron, cobalt, nickel, copper and molybdenum; *t* is a valence of the element M'; and *u* is 0 or a positive integer given by (t-1). When the element M' is phosphorus, the hydroxide compound may be phosphoric acid or phosphorous acid. In the case of forming the composite oxide film, the element M' is at least one kind of Group-13 element selected from the group consisting of boron, aluminum, gallium and indium.

In the elementary reaction of the reaction formula [2] of the step A, the ratio between the number of Y group in the compound $R^2$-M-Y and the number of OH group in the compound M'-OH is preferably in the range of Y:OH = 0.05:0.95 to 0.95:0.05. If the ratio is out of the above range, there is a tendency that the weather resistance and hardness of the resulting molded product may become insufficient due to yield deterioration or unreacted component residue. The ratio is more preferably in the range of Y:OH = 0.1:0.9 to 0.9:0.1, still more preferably Y:OH = 0.2:0.8 to 0.8:0.2.

In the step A, the elementary reaction of the reaction formula [2] is preferably conducted in the presence of no water and no solvent. Under such conditions, it is possible to favorably remove the by-products such as alcohol compound and hydrogen halide compound by volatilization from the reaction system and thereby readily shift the equilibrium of the elementary reaction toward the product side. Further, the product of the elementary reaction is obtained under such conditions as an alternating polymer in which the elements M and M' are alternately bonded together via the oxygen atom so that it becomes easier to control the molecular structure of the reaction product. The alkoxide or halide of M and the hydroxide of M' are thus preferably in the form of anhydrides.

It is further preferable to carry out the step A at a temperature of 10 to 300°C under the flow of an inert gas in order to promote the reaction and remove the by-products such as alcohol compound and hydrogen halide compound.

The precursor obtained in the step A may be subjected to drying under reduced pressure in order to remove the unreacted raw material compounds such as alkoxide or halide of M and hydroxide of M' and the by-products such as alcohol compound and hydrogen halide compound from the precursor. The drying under reduced pressure may be

performed under heating in order to promote the removal of the unreacted raw material compounds and the by-products.

It is preferable to obtain the precursor with a reaction yield of 10 to 90% in the step A. Herein, the reaction yield refers to the ratio of the total number of Y and OH groups consumed in the elementary reaction of the reaction formula [2] to the total number of Y and OH groups before the reaction as represented by the following equation.

$$\text{Reaction yield (\%)} = \frac{\text{(Total number of X and OH groups consumed during reaction)} \times 100}{\text{(Total number of X and OH groups before reaction)}}$$

If the reaction yield is less than 10%, the resulting molded product may unfavorably become low in strength or chemical resistance because of lack of the number of M-O-M' bond formed in the elementary reaction of the reaction formula [2]. If the reaction yield exceeds 90%, there may arises a problem that the precursor may become difficult to dissolve in the organic solvent or the application liquid may become too high in viscosity because of the too large number of M-O-M' bond formed in the elementary reaction of the reaction formula [2] so that it becomes unfavorably difficult to conduct molding or fine processing of the application liquid. The reaction yield is more preferably 20 to 60%.

The repeating number $\nu$ of the oxide network structure of the elements M and M' $(\text{-M-O-M'-O-})_{\nu}$ in the precursor obtained in the step A is preferably in the range of 1 to 50. If the repeating number $\nu$ is less than 1, the precursor cannot be formed. If the repeating number $\nu$ exceeds 50, there arises a problem that the precursor may become difficult to dissolve in the organic solvent or the application liquid may become too high in viscosity so that it becomes unfavorably difficult to conduct molding or fine processing of the application liquid. The repeating number $\nu$ is more preferably in the range of 1 to 10.

When the precursor obtained in the step A is in liquid form, the precursor can be used as it is as the application liquid in the step B. It is feasible to prepare the application liquid by adding an organic solvent to the precursor for viscosity control. It is further feasible to control the viscosity of the application liquid by adjusting the temperature of the coating liquid. When the precursor obtained in the step A is in solid form, by contrast, the application liquid is prepared by dissolving the precursor in an organic solvent. When the solid precursor is liquefied by heating, the precursor is not necessarily dissolved in the organic solvent. The heated, liquefied precursor can be used as it is as the application liquid. It is feasible to control the viscosity of the heated, liquefied precursor with the addition of an organic solvent. Hereinafter, the term "application liquid" refers to a precursor in liquid form or a liquid in which a precursor is dissolved in an organic solvent.

There is no particular limitation on the organic solvent as long as the precursor can be uniformly dissolved or mixed in the organic solvent. Examples of the organic solvent are: alcohols such as methanol, ethanol, 1-propanol, 2-propanol (isopropyl alcohol), 1-butanol, 2-butanol, 2-methyl-2-propanol (tert-butanol), iso-butanol, 1-pentanol, 1-hexanol, 1-heptanol, 1-octanol and methoxymethanol; polyalcohols and derivatives thereof such as ethylene glycol, glycerin, 1,2-propanediol, 1,3-propanediol, 1,2-butanediol, 1,3-butanediol, diethylene glycol monoethyl ether, ethylene glycol monomethyl ether, ethylene glycol monoethyl ether (2-ethoxyethanol), ethylene glycol monobutyl ether, propylene glycol monomethyl ether and propylene glycol monoethyl ether; ethers such as ethyl methyl ether, diethyl ether, dipropyl ether, diisopropyl ether, dibutyl ether, tetrahydrofuran and 1,4-dioxane; ketones such as acetone, acetylacetone, methyl ethyl ketone, methyl propyl ketone, methyl isobutyl ketone, cyclohexanone and isophorone; and any mixtures thereof.

When the organic solvent is added, the amount of the organic solvent added is preferably 99 mass% or less where the total amount of the application liquid is taken as 100 mass%.

The organic solvent contained in the application liquid may be dried, as required during or after the application, by known drying technique such as spin drying, Marangoni drying, heat drying, hot-air drying or vacuum drying.

The application liquid applied in the step B is hardened by photocuring and/or thermosetting in the step C, followed by performing oxidation treatment on at least the surface layer of the resulting hardened product in the step D. There is hence obtained the molded oxide product. It is feasible to obtain a laminate by forming any other layer or layers on the oxidation-treated surface layer of the molded product.

In the present invention, the term "molding" refers to holding the application liquid in a desired shape (such as a bulk, plate, a film, a fiber or a coating on a surface of a substrate) during the step C in such a manner that the hardened product obtained after the step C is in bulk form, plate form, film form, fiber form or coating form on the surface of the substrate. For example, it is feasible to obtain the hardened product in bulk, plate or film form as desired by holding the application liquid in a mold or injection molding die of desired shape in the step C. It is feasible to obtain the hardened product in fiber form by subjecting the application liquid to fiber drawing in the step C. It is feasible to obtain the hardened product in coating form by applying the application liquid in a desired shape in the step B or holding the application liquid in a desired shape in the step C. In this case, the coating may be formed by, after the application of the step B, leveling the coating into a desired shape or pressing a die of desired shape onto the coating and holding the coating in the desired

shape in the step C.

More specifically, in the case of forming the coating (thin film), the application liquid can be applied to the substrate by any known technique such as spin coating, dip coating, flow coating, roll coating, spray coating, screen printing or flexographic printing. As the substrate, there can be used any film- or sheet-shaped article formed of inorganic materials such as glasses, metals and ceramics, organic polymer materials such as polyethylene terephthalate, polycarbonate and acrylic resins and composite materials thereof.

In the case of forming the bulk-shaped product, the application liquid can be formed into the bulk shape by any known technique such as injection molding, extrusion molding, press molding, mold forming, vacuum/pressure molding or blow molding.

In the case of forming the sheet- or film-shaped product, the application liquid can be formed into the sheet or film shape by any known technique such as roll-to-roll processing, extrusion molding, casting, T-die processing or inflation processing.

It is feasible to form a seal layer by applying the application liquid to the inside of a frame of a package or the like with the use of a dispenser etc., hardening the application liquid by photocuring and/or thermosetting as mentioned below, and then, performing oxidation treatment on at least the surface layer of the hardened product.

The application liquid applied and supplied to the surface of the substrate or the inside of the mold, die or package is hardened by photocuring and/or thermosetting in the step C. In this hardening step, the polymerizable functional group of the precursor undergoes cross-linking reaction such as addition reaction, addition polymerization reaction, ring-opening reaction or ring-opening polymerization reaction so as to form a cross-linking structure and thereby harden the product, that is, fix the shape of the product.

It can be thus said that the organic cross-linked region of the molded product refers to a region obtained by photopolymerization and/or thermal polymerization of the polymerizable functionality-containing organic group $R^2$. Preferred examples of the structure of the general formula [1] in the organic cross-liked region are those obtained by cross-linking reaction such as addition reaction, addition polymerization reaction, ring-opening reaction or ring-opening polymerization reaction of the polymerizable functional group such as vinyl, allyl, styryl, acryl, methacryl, acryloyl, methacryloyl, epoxy, glycidyl, glycidoxy or oxetanyl.

It is preferable to select the photocuring reaction or the thermosetting reaction as appropriate in view of the heat resistance of the substrate, the other part and the die or mold.

In the case of the photocuring reaction, it is preferable to add a photopolymerization initiator into the application liquid so that the application liquid can be cured efficiently. The curing reaction may be promoted by heating with light irradiation.

In the case of the thermosetting reaction, it is preferable to conduct the setting reaction by heating at 60 to 150°C. It is also preferable to add a thermal polymerization initiator into the application liquid so that the application liquid can be set efficiently.

Before or during the step C, a fine structure of 100 nm or more in dimension can be formed on an unhardened surface of or inside the application liquid. There is no particular limitation on the technique of forming the fine structure. It is feasible to form the fine structure by ordinary fine processing technique such as lithography lift-off process, soft lithography process, self-organizing structure forming process, laser process or common machining process.

Examples of the lithography lift-off process are electron beam lithography lift-off process, laser lithography lift-off process and photolithography lift-off process.

Examples of the soft lithography process are microcontact printing process, nanoimprinting process, thermal cycle nanoimprinting process, dip-pen nanolithography process and nanotranfer printing process. Preferred are nanoimprinting process and thermal cycle nanoimprinting process, in each of which a mold having a surface formed with an emboss pattern is pressed against a surface of the precursor before the hardening so as to transfer an inverted emboss pattern onto the surface of the precursor, for convenience and facilitation.

As mentioned above, the application liquid can be fixed into the shape with the fine structure by carrying out the step C during and/or after the fine processing. The fine processing may be performed after the step C takes place for a predetermined time. In this case, the application liquid can be fixed into the shape with the fine structure by carrying out the step C during and/or after the fine processing.

In the subsequent step D, the oxidation treatment is performed on at least the surface layer of the hardened product obtained in the step C in such a manner as to convert at least the surface layer of the hardened product to be of the inorganic glassy material. Examples of the oxidation treatment are firing, oxygen plasma treatment and ozone exposure. The oxygen plasma treatment and the ozone exposure are applicable even under low temperature conditions and thus can be performed on the thin film on the substrate of low heat resistance. Although oxygen is not necessarily required in the firing, it is preferable to perform the firing in the presence of oxygen in order to densify the molded product. The firing can be performed in one-step temperature rise process or multi-step temperature rise process.

As a result of the oxidation treatment in which the organic component of the hardened product obtained in the step C disappears by oxidation, at least the surface layer of the hardened product becomes densified. This densified

part corresponds to the inorganic glassy material. It is possible that the resulting molded product can attain high durability and strength since at least the surface layer of the molded product is of the inorganic glassy material. When the oxidation treatment is performed on only the surface of the hardened product obtained in the step C, only the organic component of the surface of the hardened product disappears by oxidation so that it is possible to limit the amount of shrinkage associated with the densification of the molded product to a very small level and thereby improve the surface durability of the molded product without impairing the fine structure.

A metal component such as an alkali metal, an alkaline-earth metal, a transition metal or a rare earth metal may be added in the form of a salt e.g. carbonate, nitrate or sulfate, an oxide or a complex, within the range that does not impair the effect of the present invention, in addition to the raw material compounds $R^2$-M-Y and M'-OH in the step A and/or the precursor and organic solvent in the application liquid. For example, a metal component such as $Li_2O$, $Na_2O$, $K_2O$, MgO, CaO, BaO, PbO, $Fe_2O_3$, ZnO, $Al_2O_3$, $Pb_2O$, $Cs_2O$, $GeO_2$, $As_2O_3$, $Sb_2O_5$, $V_2O_5$, $Ga_2O_3$, $TeO_2$, SnO, CuO, $Ta_2O_3$, $CeO_2$, $Tl_2O$, $PbF_2$, $Bi_2O_3$, $P_2O_5$, CdO and $CaF_2$ may be added in order to control the composition of the inorganic glassy material obtained by the oxidation treatment.

Furthermore, any other components such as a surfactant, a cross-linking agent, an antioxidant, an ultraviolet absorbent, an infrared absorbent, a flame retardant, a hydrolysis inhibitor, an antifungal agent, a pigment, a dye, a coloring agent, a rare earth compound and a fluorescent material may be contained in the application liquid within the range that does not interfere with the effect of the present invention.

## Examples

The present invention will be described in more detail below by way of the following examples.

In each of the following examples and comparative examples, a molded oxide product was produced as a sample by preparing an application liquid, applying and hardening the application liquid and performing oxidation treatment on the hardened product. The preparation method of the application liquid and the production method of the molded product will be explained later in detail.

### [Evaluation of Molded Product]

The obtained molded product was evaluated as follows.

### (1) Thickness Measurement of Molded Product

In the case where the sample was in the form of a coating laminated on a substrate and having a smooth surface without fine processing, the thickness of the coating was measured with the use of a prism coupler "Model 2010" manufactured by Metricon Corporation. In the case where the sample was in the form of a bulk, sheet or film without fine processing, the thickness of the sample was measured with the use of a micrometer or vernier caliper.

### (2) Composition Analysis in Thickness Direction of Molded Product

In the case where the sample of the molded product had a smooth surface without fine processing, the composition of the sample was analyzed by glow-discharge emission analysis in a thickness direction of the sample.

### (3) Measurement of Pencil Hardness

In the case where the sample of the molded product had a smooth surface without fine processing, the pencil hardness of the molded product was determined according to JIS K 5600 "Testing methods for paints" as the degree of hardness of a pencil with which, when scratching a surface of the molded product five times with the application of a 1-kg load to the pencil, the number of times of damage in the surface of the molded product was less than 2.

### (4) Evaluation of Fine Processability

In the case where the molded product had a surface subjected to fine processing, the shape of the surface of the molded product was measured with the use of a scanning electron microscope (field-emission scanning electron microscope "S-4800" manufactured by Hitachi Ltd.). In the case where the molded product had a fine structure formed therein by fine processing, the fme structure inside the molded product was measured by optical technique.

(5) Evaluation of Heat Resistance

In the case where the sample of the molded product has a smooth surface without fine processing, the sample was heated at 200°C for 1 hour and tested for its appearance before and after the heating. The sample was judged as "passing (as indicated by O in the table)" when there was no appearance change such as deformation, crack or discoloration caused in the sample by the heating and judged as "failing (as indicated by X in the table)" when there was any appearance change. In the case where the molded product had a surface subjected to fine processing, the molded product was tested for its appearance in the same manner as above. Further, the shape of the surface of the molded product was measured with the use of a scanning electron microscope (field-emission scanning electron microscope "S-4800" manufactured by Hitachi Ltd.) before and after the heating. The molded product was judged as "passing (as indicated by O in the table)" when the amount of change of the in-plane dimension of the surface shape of the molded product was 20 nm or less and was judged as "failing (as indicated by X in the table)" when the amount of change of the in-plane dimension of the surface shape of the molded product exceeded 20 nm.

(6) Measurement of Refractive Index

In the case where the sample was in the form of a coating having a smooth surface without fine processing, the refractive index of the surface of the coating was measured at a wavelength of 633 nm with the use of a prism coupler "Model 2010" manufactured by Metricon Corporation.

(7) Measurement of Transmittance

In the case where the sample was in the form of a coating laminated on a substrate and having a smooth surface without fine processing, the transmittance of the substrate with the coating was measured in a wavelength range of 300 to 800 nm with a use of a spectrophotometer "U-3500" manufactured by Hitachi Ltd.

[Example 1]

Preparation of Application Liquid

As raw material compounds for preparation of a precursor having a polymerizable functional group-containing organic group and a M-O-M' bond, boric anhydride ($H_3BO_3$) (available from Wako Pure Chemical Industries Ltd.) and 3-methacryloxypropyltrimethoxysilane ($CH_2=C(CH_3)C(O)OC_3H_6Si(OCH_3)_3$) (available from Shin-Etsu Chemical Co., Ltd.) were provided. These raw material compounds were reacted at a mole ratio of 1:1 (number of Y group: number of OH group = 0.5:0.5) and at 100°C for 3 hours while stirring in the atmosphere of nitrogen gas, thereby yielding the precursor in solid form. The elementary reaction of the reaction formula [2] was herein conducted while blowing the nitrogen gas into the reaction vessel and discharging the nitrogen gas together with by-produced methanol out from the reaction system. The total number of Y and OH groups consumed in the elementary reaction of the reaction formula [2] was determined from NMR spectrum measurement of the solid precursor. It was confirmed by the determination result that the reaction yield was about 45%. It was further confirmed by that NMR measurement that the repeating number ν of the network structure $[\text{-Si-O-B-O-}]_\nu$, of the Si/B oxide was 2 to 3. The solid precursor was dissolved in ethylene glycol monoethyl ether (available from Wako Pure Chemical Industries Ltd.), followed by adding thereto Irgacure 184 and 907 (available from Ciba Specialty Chemicals Corporation) as a photopolymerization initiator. With this, there was obtained an application liquid containing the precursor. The amount of the ethylene glycol monoethyl ether added and the amount of the photopolymerization initiator added were 56 mass% and 5 mass% (Irgacure 184: 3 mass%, Irgacure 907: 2 mass%), respectively, taking the total amount of the application liquid as 100 mass%.

Production of Molded Product (Coating)

The above-prepared application liquid was applied by spin coating onto a surface of a quartz glass substrate (dimensions: about 40 mm × 25 mm, thickness: 1 mm). Using a 500-W high-pressure mercury-vapor lamp, the resulting coating was exposed to light irradiation for 30 minutes and thereby hardened by photocuring. The completion of the photocuring reaction was checked by measuring ATR infrared absorption spectra of the application liquid and the light-irradiated coating and comparing an absorption peak of C=C bond at around 1638 $cm^{-1}$ in the spectrum of the application liquid with that in the spectrum of the light-irradiated coating. The quartz glass substrate with the hardened coating was heated up from room temperature to 550°C at a rate of 5°C/min and fired at 550°C for 3 hours in a firing furnace.

Evaluation Results of Molded Product (Coating)

The thus-obtained coating was 4 μm in thickness and was transparent and colorless. It was confirmed, by the composition analysis of the coating in the thickness direction by glow-discharge emission spectroscopy, that the whole of the coating was formed from silicon, boron and oxygen in view of the fact that silicon, boron and oxygen were present at constant concentrations, without being unevenly distributed, from the surface of the coating throughout the depth of the coating adjacent to the surface of the quartz glass substrate. It was also confirmed by the XRD measurement of the coating that the coating had an amorphous structure. Namely, the whole of the coating was of an inorganic glassy material of silicon, boron and oxygen in the present example. Further, it was confirmed that the pencil hardness of the coating was higher than 10H in view of the fact that there remained no damage in the coating even by a 10H pencil in the pencil hardness test. When the sample in which the coating was laminated on the quartz glass substrate was heated at 200°C for 1 hour and tested for its appearance before and after the heating, it was confirmed that the coating had high resistance with no change such as deformation, crack or discoloration caused by the heating. The evaluation results are summarized in TABLE 1. The refractive index of the coating was 1.53 at a wavelength of 633 nm. Furthermore, it was seen from the transmittance spectrum of FIG. 1 that the substrate with the coating had high transmittance from near ultraviolet to visible wavelength ranges.

[Example 2]

The same application liquid as that of Example 1 was prepared and applied by dip coating onto a surface of a borosilicate glass substrate (dimensions: about 40 mm × 25 mm, thickness: 1 mm). By a 500-W high-pressure mercury-vapor lamp, the resulting coating was exposed to light irradiation for 3 minutes. After that, a polydimethylsiloxane mold (hereinafter abbreviated as "PDMS mold") having a fine concave-convex pattern of about 350 nm to about 100 μm in size was pressed onto a surface the coating for several seconds, and then, separated from the coating. The coating was again exposed to light irradiation for 60 minutes by a 500-W high-pressure mercury-vapor lamp and thereby hardened by photocuring. Herein, the PDMS mold used was the one having its fine concave-convex pattern transferred from a nanoimprinting quartz mold (NTT-AT MIN-PH Series). The completion of the photocuring reaction was checked in the same manner as in Example 1. Then, the borosilicate glass substrate with the hardened coating was fired in a firing furnace in the same manner as in Example 1. The thus-obtained coating was transparent and colorless. It was confirmed that a fine concave-convex pattern was formed on the surface of the coating as shown in FIG. 2. When the concave-convex pattern of the surface of the coating and the corresponding concave-convex pattern of the nanoimprinting quartz mold were measured with the use of a scanning electron microscope (field-emission scanning electron microscope "S-4800" manufactured by Hitachi Ltd.) and compared with each other, the in-plane dimension error of the surface pattern of the coating was less than 10 nm. It was thus confirmed that the surface of the coating was finely processed with high accuracy. When the sample of the molded product in which the coating having the fine concave-convex pattern formed on the surface thereof was laminated on the borosilicate glass substrate was heated at 200°C for 1 hour and tested for its appearance before and after the heating, there was no change such as deformation, crack or discoloration caused in the coating by the heating. When the surface shape of the molded product was measured with the use of a scanning electron microscope (field-emission scanning electron microscope "S-4800" manufactured by Hitachi Ltd.) before and after the heating, the amount of change of the in-plane dimension of the surface shape of the molded product was less than 10 nm. It was thus confirmed that the molded product had high heat resistance. The evaluation results are summarized in TABLE 1.

[Example 3]

The same application liquid as that of Example 1 was prepared and applied by dip coating onto a surface of a borosilicate glass substrate (dimensions: about 40 mm × 25 mm, thickness: 1 mm). The resulting coating was exposed to light irradiation for 60 minutes by two-beam interference method using a He-Cd laser (wavelength: 325 nm), thereby hardening the coating by photocuring and forming a fine grating structure of about 2 μm in pitch on a surface of the coating. After that, the coating having its surface formed with the fine grating structure was obtained by washing out an unhardened part of the coating with ethanol. The borosilicate glass substrate with the hardened coating was heated up from room temperature to 550°C at a rate of 1°C/min and fired at 550°C for 3 hours in a firing furnace. It was confirmed by microscopic observation that the fine grating structure was formed on the surface of the coating as shown in FIG. 3. When the grating structure of the surface of the coating was measured with the use of a scanning electron microscope (field-emission scanning electron microscope "S-4800" manufactured by Hitachi Ltd.) and compared with a pitch size determined from the incident angle and wavelength of interference light, the periodic error of the grating structure of the coating was less than 10 nm. It was thus confirmed that the surface of the coating was finely processed with high accuracy. When the sample of the molded product in which the coating having the fine concave-convex pattern formed

on the surface thereof was laminated on the borosilicate glass substrate was heated at 200°C for 1 hour and tested for its appearance before and after the heating, there was no change such as deformation, crack or discoloration caused in the coating by the heating. When the surface shape of the molded product was measured with the use of a scanning electron microscope (field-emission scanning electron microscope "S-4800" manufactured by Hitachi Ltd.) before and after the heating, the amount of change of the in-plane dimension of the surface shape of the molded product was less than 10 nm. It was thus confirmed that the molded product had high heat resistance. The evaluation results are summarized in TABLE 1.

[Example 4]

Preparation of Application Liquid

As raw material compounds for preparation of a precursor having a polymerizable functional group-containing organic group and a M-O-M' bond, diphenylsilanediol ($(C_6H_5)_2Si(OH)_2$) (available from Shin-Etsu Chemical Co., Ltd.) and titanium-O-allyloxypolyethyleneoxytriisopropoxide ($CH_2=CHCH_2(OCH_2CH_2)_{10}$-O-$Ti(OCH(CH_3)_2)_3$) (available from Gelest Co., Ltd.) were provided. These raw material compounds were reacted at a mole ratio of 1:0.2 (number of Y group: number of OH group = 3:0.8) and at 80°C for 16 hours while stirring in the atmosphere of nitrogen gas, thereby yielding the precursor in liquid form. The elementary reaction of the reaction formula [2] was herein conducted while blowing the nitrogen gas into the reaction vessel and discharging the nitrogen gas together with by-produced isopropanol out from the reaction system. The total number of Y and OH groups consumed in the elementary reaction of the reaction formula [2] was determined from NMR spectrum measurement of the liquid precursor. It was confirmed by the determination result that the reaction yield was about 57%. It was further confirmed by that NMR measurement that the repeating number $\nu$ of the network structure $[\text{-Si-O-Ti-O-}]_\nu$ of the Si/Ti oxide was 2 to 3. The liquid precursor was dissolved in ethanol (available from Wako Pure Chemical Industries Ltd.), followed by adding thereto Irgacure 369 (available from Ciba Specialty Chemicals Corporation) as a photopolymerization initiator. With this, there was obtained an application liquid containing the precursor. The amount of the ethanol added and the amount of the photopolymerization initiator added were 40 mass% and 5 mass%, respectively, taking the total amount of the application liquid as 100 mass%.

Production of Molded Product (Coating)

The above-prepared application liquid was applied by spin coating onto a surface of a quartz glass substrate (dimensions: about 40 mm × 25 mm, thickness: 1 mm). Using a 500-W high-pressure mercury-vapor lamp, the resulting coating was exposed to light irradiation for 30 minutes and thereby hardened by photocuring. The completion of the photocuring reaction was checked by measuring ATR infrared absorption spectra of the application liquid and the light-irradiated coating and comparing an absorption peak of C=C bond at around 1638 $cm^{-1}$ in the spectrum of the application liquid with that in the spectrum of the light-irradiated coating. The quartz glass substrate with the hardened coating was heated up from room temperature to 550°C at a rate of 5°C/min and fired at 550°C for 3 hours in a firing furnace.

Evaluation Results of Molded Product (Coating)

The thus-obtained coating was 4 μm in thickness and was transparent and colorless. It was confirmed, by the composition analysis of the coating in the thickness direction by glow-discharge emission spectroscopy, that the whole of the coating was formed from silicon, titanium and oxygen in view of the fact that silicon, titanium and oxygen were present at constant concentrations, without being unevenly distributed, from the surface of the coating throughout the depth of the coating adjacent to the surface of the quartz glass substrate. It was also confirmed by the XRD measurement of the coating that the coating had an amorphous structure. Namely, the whole of the coating was of an inorganic glassy material of silicon, titanium and oxygen in the present example. Further, it was confirmed that the pencil hardness of the coating was higher than 10H in view of the fact that there remained no damage in the coating even by a 10H pencil in the pencil hardness test. When the sample in which the coating was laminated on the quartz glass substrate was heated at 200°C for 1 hour and tested for its appearance before and after the heating, it was confirmed that the coating had high resistance with no change such as deformation, crack or discoloration caused by the heating. The evaluation results are summarized in TABLE 1.

[Example 5]

The same application liquid as that of Example 4 was prepared and applied by dip coating onto a surface of a borosilicate glass substrate (dimensions: about 40 mm × 25 mm, thickness: 1 mm). By a 500-W high-pressure mercury-vapor lamp, the resulting coating was exposed to light irradiation for 3 minutes. After that, a PDMS mold having a fine

concave-convex pattern of about 350 nm to about 100 μm in size was pressed onto a surface the coating for several seconds, and then, separated from the coating. The coating was again exposed to light irradiation for 60 minutes by a 500-W high-pressure mercury-vapor lamp and thereby hardened by photocuring. Herein, the PDMS mold used was the one having its fine concave-convex pattern transferred from a nanoimprinting quartz mold (NTT-AT MIN-PH Series). The completion of the photocuring reaction was checked in the same manner as in Example 4. Then, the borosilicate glass substrate with the hardened coating was fired in a firing furnace in the same manner as in Example 4. The thus-obtained coating was transparent and colorless. It was confirmed that a fine concave-convex pattern_ was formed on the surface of the coating. When the concave-convex pattern of the surface of the coating and the corresponding concave-convex pattern of the nanoimprinting quartz mold were measured with the use of a scanning electron microscope (field-emission scanning electron microscope "S-4800" manufactured by Hitachi Ltd.) and compared with each other, the in-plane dimension error of the surface pattern of the coating was less than 10 nm. It was thus confirmed that the surface of the coating was finely processed with high accuracy. When the sample of the molded product in which the coating having the fine concave-convex pattern formed on the surface thereof was laminated on the borosilicate glass substrate was heated at 200°C for 1 hour and tested for its appearance before and after the heating, there was no change such as deformation, crack or discoloration caused in the coating by the heating. When the surface shape of the molded product was measured with the use of a scanning electron microscope (field-emission scanning electron microscope "S-4800" manufactured by Hitachi Ltd.) before and after the heating, the amount of change of the in-plane dimension of the surface shape of the molded product was less than 10 nm. It was thus confirmed that the molded product had high heat resistance. The evaluation results are summarized in TABLE 1.

[Example 6]

The same application liquid as that of Example 4 was prepared and applied by dip coating onto a surface of a borosilicate glass substrate (dimensions: about 40 mm × 25 mm, thickness: 1 mm). The resulting coating was exposed to light irradiation for 60 minutes by two-beam interference method using a He-Cd laser (wavelength: 325 nm), thereby hardening the coating by photocuring and forming a fine grating structure of about 2 μm in pitch on a surface of the coating. After that, the coating having its surface formed with the fine grating structure was obtained by washing out an unhardened part of the coating with ethanol. The borosilicate glass substrate with the hardened coating was heated up from room temperature to 550°C at a rate of 1°C/min and fired at 550°C for 3 hours in a firing furnace. It was confirmed by microscopic observation that the fine grating structure was formed on the surface of the coating. When the grating structure of the surface of the coating was measured with the use of a scanning electron microscope (field-emission scanning electron microscope "S-4800" manufactured by Hitachi Ltd.) and compared with a pitch size determined from the incident angle and wavelength of interference light, the periodic error of the grating structure of the coating was less than 10 nm. It was thus confirmed that the surface of the coating was finely processed with high accuracy. When the sample of the molded product in which the coating having the fine concave-convex pattern formed on the surface thereof was laminated on the borosilicate glass substrate was heated at 200°C for 1 hour and tested for its appearance before and after the heating, there was no change such as deformation, crack or discoloration caused in the coating by the heating. When the surface shape of the molded product was measured with the use of a scanning electron microscope (field-emission scanning electron microscope "S-4800" manufactured by Hitachi Ltd.) before and after the heating, the amount of change of the in-plane dimension of the molded product was less than 10 nm. It was thus confirmed that the molded product had high heat resistance. The evaluation results are summarized in TABLE 1.

[Example 7]

Preparation of Application Liquid

As raw material compounds for preparation of a precursor having a polymerizable functional group-containing organic group and a M-O-M' bond, boric anhydride ($H_3BO_3$) (available from Wako Pure Chemical Industries Ltd.), 3-methacryloxypropyltrimethoxysilane ($CH_2=C(CH_3)C(O)OC_3H_6Si(OCH_3)_3$) (available from Shin-Etsu Chemical Co., Ltd.) and titanium tetraisopropoxide ($Ti(OCH(CH_3)_2)_4$) (available from Wako Pure Chemical Industries Ltd.) were provided. These raw material compounds were reacted at a mole ratio of 1:1:0.1 (number of Y group, that is, total number of methoxy and isopropoxy groups: number of OH group: = 15:17) and at 80°C for 6 hours while stirring in the atmosphere of nitrogen gas, thereby yielding the precursor in solid form. The elementary reaction of the reaction formula [2] was herein conducted while blowing the nitrogen gas into the reaction vessel and discharging the nitrogen gas together with by-produced methanol and isopropanol out from the reaction system. The total number of Y and OH groups consumed in the elementary reaction of the reaction formula [2] was determined from NMR spectrum measurement of the solid precursor. It was confirmed by the determination result that the reaction yield was about 50%. It was further confirmed by that NMR measurement that the repeating number $\nu$ of the network structure $[-M-O-M'-O-]_\nu$, (where M was Si and

Ti; and M' was B) of the Si/Ti/B oxide was 3 to 4. The solid precursor was dissolved in 2-ethoxyethanol (available from Wako Pure Chemical Industries Ltd.), followed by adding thereto Irgacure 184 (available from Ciba Specialty Chemicals Corporation) as a photopolymerization initiator. With this, there was obtained an application liquid containing the precursor. The amount of the 2-ethoxyethanol added and the amount of the photopolymerization initiator added were 60 mass% and 5 mass%, respectively, taking the total amount of the application liquid as 100 mass%.

Production of Molded Product (Coating)

The above-prepared application liquid was applied by spin coating onto a surface of a quartz glass substrate (dimensions: about 40 mm × 25 mm, thickness: 1 mm). Using a 500-W high-pressure mercury-vapor lamp, the resulting coating was exposed to light irradiation for 30 minutes and thereby hardened by photocuring. The completion of the photocuring reaction was checked by measuring ATR infrared absorption spectra of the application liquid and the light-irradiated coating and comparing an absorption peak of C=C bond at around 1638 $cm^{-1}$in the spectrum of the application liquid with that in the spectrum of the light-irradiated coating. The quartz glass substrate with the hardened coating was heated up from room temperature to 550°C at a rate of 5°C/min and fired at 550°C for 3 hours in a firing furnace.

Evaluation Results of Molded Product (Coating)

The thus-obtained coating was 4 μm in thickness and was transparent and colorless. It was confirmed, by the composition analysis of the coating in the thickness direction by glow-discharge emission spectroscopy, that the whole of the coating was formed from silicon, boron, titanium and oxygen in view of the fact that silicon, boron, titanium and oxygen were present at constant concentrations, without being unevenly distributed, from the surface of the coating throughout the depth of the coating adjacent to the surface of the quartz glass substrate. It was also confirmed by the XRD measurement of the coating that the coating had an amorphous structure. Namely, the whole of the coating was of an inorganic glassy material of silicon, boron, titanium and oxygen in the present example. Further, it was confirmed that the pencil hardness of the coating was higher than 10H in view of the fact that there remained no damage in the coating even by a 10H pencil in the pencil hardness test. When the sample in which the coating was laminated on the quartz glass substrate was heated at 200°C for 1 hour and tested for its appearance before and after the heating, it was confirmed that the coating had high resistance with no change such as deformation, crack or discoloration caused by the heating. The evaluation results are summarized in TABLE 1.

[Example 8]

The same application liquid as that of Example 7 was prepared and applied by dip coating onto a surface of a borosilicate glass substrate (dimensions: about 40 mm × 25 mm, thickness: 1 mm). By a 500-W high-pressure mercury-vapor lamp, the resulting coating was exposed to light irradiation for 3 minutes. After that, a PDMS mold having a fine concave-convex pattern of about 350 nm to about 100 μm in size was pressed onto a surface the coating for several seconds, and then, separated from the coating. The coating was again exposed to light irradiation for 60 minutes by a 500-W high-pressure mercury-vapor lamp and thereby hardened by photocuring. Herein, the PDMS mold used was the one having its fine concave-convex pattern transferred from a nanoimprinting quartz mold (NTT-AT MIN-PH Series). The completion of the photocuring reaction was checked in the same manner as in Example 7. Then, the borosilicate glass substrate with the hardened coating was fired in a firing furnace in the same manner as in Example 7. The thus-obtained coating was transparent and colorless. It was confirmed that a fine concave-convex pattern was formed on the surface of the coating. When the concave-convex pattern of the surface of the coating and the corresponding concave-convex pattern of the nanoimprinting quartz mold were measured with the use of a scanning electron microscope (field-emission scanning electron microscope "S-4800" manufactured by Hitachi Ltd.) and compared with each other, the in-plane dimension error of the surface pattern of the coating was less than 10 nm. It was thus confirmed that the surface of the coating was finely processed with high accuracy. When the sample of the molded product in which the coating having the fine concave-convex pattern formed on the surface thereof was laminated on the borosilicate glass substrate was heated at 200°C for 1 hour and tested for its appearance before and after the heating, there was no change such as deformation, crack or discoloration caused in the coating by the heating. When the surface shape of the molded product was measured with the use of a scanning electron microscope (field-emission scanning electron microscope "S-4800" manufactured by Hitachi Ltd.) before and after the heating, the amount of change of the in-plane dimension of the surface shape of the molded product was less than 10 nm. It was thus confirmed that the molded product had high heat resistance. The evaluation results are summarized in TABLE 1.

[Example 9]

The same application liquid as that of Example 7 was prepared and applied by dip coating onto a surface of a borosilicate glass substrate (dimensions: about 40 mm × 25 mm, thickness: 1 mm). The resulting coating was exposed to light irradiation for 60 minutes by two-beam interference method using a He-Cd laser (wavelength: 325 nm), thereby hardening the coating by photocuring and forming a fine grating structure of about 2 μm in pitch on a surface of the coating. After that, the coating having its surface formed with the fine grating structure was obtained by washing out an unhardened part of the coating with ethanol. The borosilicate glass substrate with the hardened coating was heated up from room temperature to 550°C at a rate of 1°C/min and fired at 550°C for 3 hours in a firing furnace. It was confirmed by microscopic observation that the fine grating structure was formed on the surface of the coating. When the grating structure of the surface of the coating was measured with the use of a scanning electron microscope (field-emission scanning electron microscope "S-4800" manufactured by Hitachi Ltd.) and compared with a pitch size determined from the incident angle and wavelength of interference light, the periodic error of the grating structure of the coating was less than 10 nm. It was thus confirmed that the surface of the coating was finely processed with high accuracy. When the sample of the molded product in which the coating having the fine concave-convex pattern formed on the surface thereof was laminated on the borosilicate glass substrate was heated at 200°C for 1 hour and tested for its appearance before and after the heating, there was no change such as deformation, crack or discoloration caused in the coating by the heating. When the surface shape of the molded product was measured with the use of a scanning electron microscope (field-emission scanning electron microscope "S-4800" manufactured by Hitachi Ltd.) before and after the heating, the amount of change of the in-plane dimension of the surface shape of the molded product was less than 10 nm. It was thus confirmed that the molded product had high heat resistance. The evaluation results are summarized in TABLE 1.

[Comparative Example 1]

A commercially available PMMA was molded in a sheet-shaped PDMS mold, thereby obtaining a sheet-shaped molded product of about 1 mm in thickness. The sheet-shaped molded product had a surface hardness lower than those of the above examples as the pencil hardness of the sheet-shaped molded product was 2H. When the sheet-shaped molded product was heated at 200°C for 1 hour and tested for its appearance before and after the heating, there occurred yellow discoloration of the molded product by the heating. The evaluation results are summarized in TABLE 1.

[Comparative Example 2]

A commercially available PMMA was molded in a sheet-shaped PDMS mold, which had the same fine concave-convex pattern of about 350 nm to about 100 μm in size as in Example 2, thereby obtaining a sheet-shaped molded product having a transferred fine structure on a surface thereof. When the sheet-shaped molded product was heated at 200°C for 1 hour and tested for its appearance before and after the heating, there occurred yellow discoloration of the molded product by the heating. Further, the fine structure of the surface of the sheet-shaped molded product was deformed by the heating and was not maintained. Namely, the molded product did not maintain its shape during the heating at 200°C. The evaluation results are summarized in TABLE 1.

[Comparative Example 3]

In a reaction vessel, orthophosphoric acid ($H_3PO_4$) was converted to liquid form by heating at 40°C in the atmosphere of nitrogen gas. Subsequently, dimethyldichlorosilane ($(CH_3)_2SiCl_2$) was added to the orthophosphoric acid. The resulting mixture was heated while stirring for 3 hours, and then, heated to 100°C. To the mixture, tin chloride ($SnCl_2$) was further added. The mixing ratio of orthophosphoric acid, dimethyldichlorosilane and tin chloride was adjusted to $H_3PO_4$:$(CH_3)_2SiCl_2$:$SnCl_2$ = 2:2.5:0.5 in terms of mol ratio. The mixture was heated at 250°C for 1 hour in the atmosphere of nitrogen gas. With this, there was obtained a thermoplastic organic-inorganic hybrid glass material having a softening point of 123°C. This material was molded in a sheet-shaped PDMS mold, thereby obtaining a sheet-shaped molded product of about 1 mm in thickness. The sheet-shaped molded product had a surface hardness lower than those of the above examples as the pencil hardness of the sheet-shaped molded product was HB. When the sheet-shaped molded product was heated at 200°C for 1 hour and tested for its appearance before and after the heating, the molded product was molten by the heating and did not maintain its shape. The evaluation results are summarized in TABLE 1.

[Comparative Example 4]

In a reaction vessel, phosphorous acid ($H_3PO_3$) was mixed with dimethyldichlorosilane ($(CH_3)_2SiCl_2$) by stirring for 3 hours at room temperature in the atmosphere of nitrogen gas. Subsequently, tin chloride ($SnCl_2$) was added to the

mixture. The mixing ratio of phosphorous acid, dimethyldichlorosilane and tin chloride was adjusted to $H_3PO_3$:$(CH_3)_2SiCl_2$:$SnCl_2$ = 1:0.5:0.5 in terms of mol ratio. The mixture was heated at 160°C for 3 hours and at 200°C for 3 hours in the atmosphere of nitrogen gas. With this, there was obtained a thermoplastic organic-inorganic hybrid glass material having a softening point of 72°C. This material was molded in a sheet-shaped PDMS mold, thereby obtaining a sheet-shaped molded product of about 1 mm in thickness. The sheet-shaped molded product had a surface hardness lower than those of the above examples as the pencil hardness of the sheet-shaped molded product was 2H. When the sheet-shaped molded product was heated at 200°C for 1 hour and tested for its appearance before and after the heating, the molded product was molten by the heating and did not maintain its shape. The evaluation results are summarized in TABLE 1.

TABLE 1

| | M–O–M' or material | Molded product | Thickness | Thickness of layer of inorganic glassy material | Pencil hardness |
|---|---|---|---|---|---|
| Example 1 | Si–O–B | coating | 4 μm | 4 μm | over 10H |
| Example 2 | Si–O–B | coating | — | — | — |
| Example 3 | Si–O–B | coating | — | — | — |
| Example 4 | Si–O–Ti | coating | 4 μm | 4 μm | over 10H |
| Example 5 | Si–O–Ti | coating | — | — | — |
| Example 6 | Si–O–Ti | coating | — | — | — |
| Example 7 | Si–O–B<br>Ti–O–B | coating | 4 μm | 4 μm | over 10H |
| Example 8 | Si–O–B<br>Ti–O–B | coating | — | — | — |
| Example 9 | Si–O–B<br>Ti–O–B | coating | — | — | — |
| Comparative Example 1 | PMMA | sheet | 1 mm | — | 2H |
| Comparative Example 2 | PMMA | sheet | — | — | — |
| Comparative Example 3 | thermoplastic organic-inorganic hybrid glass | sheet | 1 mm | — | HB |
| Comparative Example 4 | thermoplastic organic-inorganic hybrid glass | sheet | 1 mm | — | 2H |

TABLE 1 (continued)

| | Moldability | Heat resistance | |
|---|---|---|---|
| | | Appearance | In-plane dimension change |
| Example 1 | shaped into a coating by spin coating | ○ | — |
| Example 2 | shaped into a coating by dip coating and formed with fine surface structure by means of mold | ○ | ○ (less than 10 nm) |
| Example 3 | shaped into a coating by dip coating and formed with fine surface structure by interference exposure | ○ | ○ (less than 10 nm) |
| Example 4 | shaped into a coating by spin coating | ○ | — |
| Example 5 | shaped into a coating by dip coating and formed with fine surface structure by means of mold | ○ | ○ (less than 10 nm) |
| Example 6 | shaped into a coating by dip coating and formed with fine surface structure by interference exposure | ○ | ○ (less than 10 nm) |
| Example 7 | shaped into a coating by spin coating | ○ | — |
| Example 8 | shaped into a coating by dip coating and formed with fine surface structure by means of mold | ○ | ○ (less than 10 nm) |
| Example 9 | shaped into a coating by dip coating and formed with fine surface structure by interference exposure | ○ | ○ (less than 10 nm) |
| Comparative Example 1 | shaped by molding | — | ×: discoloration |
| Comparative Example 2 | shaped by molding and formed with fine surface structure by means of mold | — | ×: discoloration<br>×: deformation in fine structure |
| Comparative Example 3 | shaped by molding | — | ×: deformation |
| Comparative Example 4 | shaped by molding | — | ×: deformation |

As described above, the molded product of the present invention can be processed by the same or similar fine processing techniques as conventional organic polymer materials but attain higher durability than conventional organic polymer materials. It is therefore possible to apply the molded product of the present invention to various optical materials, electronic materials and surface modification materials. For example, the molded product of the present invention can be applied as a Low-k material, a low-refractive-index product, a water repellent product, an optical waveguide, a hard coating, an insulating layer, a diffraction optical element, a gas barrier layer, an UV absorbing product, a near-infrared absorbing product, an infrared absorbing product, an optical filter, a high-durability paint, a ship bottom paint, an antimicrobial product, a sealing material of a light emitting device e.g. light emitting diode or a surface modification material therefor, a holographic material and a high-durability film or sheet material.

Although the present invention has been described with reference to the above specific embodiments, the present invention is not limited to these exemplary embodiments. Various modifications and variations of the embodiments described above will occur based on the knowledge of those skilled in the art without departing from the scope of the

present invention.

## Claims

1. A molded oxide product comprising an oxide region and an organic cross-linked region and having at least a surface layer thereof formed of an inorganic glassy material.

2. The molded oxide product according to claim 1, wherein the oxide region has a M-O-M' bond in which elements M and M' are bonded together via an oxygen atom, where M and M' are each independently at least one kind of element selected from the group consisting of aluminum, silicon, germanium, indium, tin, lead, phosphorus, boron, gallium, lithium, sodium, potassium, rubidium, cesium, beryllium, magnesium, calcium, strontium, barium, neodymium, praseodymium, erbium, cerium, titanium, zirconium, tantalum, zinc, tungsten, vanadium, chromium, manganese, iron, cobalt, nickel, copper and molybdenum.

3. The molded oxide product according to claim 2, wherein the oxide region is a composite oxide region having a M-O-M' bond in which elements M and M' are bonded together via an oxygen atom, where the element M is at least one selected from the group consisting of titanium, zirconium, aluminum, silicon, germanium, indium, tin, tantalum, zinc, tungsten and lead; and the element M' is at least one kind of Group-13 element selected from the group consisting of boron; aluminum, gallium and indium.

4. The molded oxide product according to claim 2 or 3, wherein the organic cross-linked region has a structure of the following formula [1] and at least two ends thereof bonded to the elements M and M', respectively

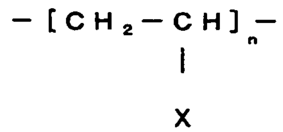

[1]

where X is at least one selected from the group consisting of a hydrogen atom, a OH group, a (C=O)-$R^1$ group, a (C=O)-O$R^1$ group and a phenyl group; $R^1$ is a $C_1$-$C_{20}$ hydrocarbon group; and *n* is an integer of 1 or greater.

5. The molded oxide product according to any one of claims 1 to 4, wherein the organic cross-linked region is a region obtained by photocuring and/or thermosetting of an organic group having a polymerizable functional group.

6. The molded oxide product according to claim 5, wherein the polymerizable functional group is at least one group selected from the group consisting of vinyl, allyl, styryl, acryl, methacryl, acryloyl, methacryloyl, epoxy, glycidyl, glycidoxy and oxetanyl.

7. The molded oxide product according to any one of claims 1 to 6, wherein the inorganic glassy material is a material having a bond represented by either M-O-M', M-O-M or M'-O-M', where M and M' are each independently at least one kind of element selected from the group consisting of aluminum, silicon, germanium, indium, tin, lead, phosphorus, boron, gallium, lithium, sodium, potassium, rubidium, cesium, beryllium, magnesium, calcium, strontium, barium, neodymium, praseodymium, erbium, cerium, titanium, zirconium, tantalum, zinc, tungsten, vanadium, chromium, manganese, iron, cobalt, nickel, copper and molybdenum.

8. The molded oxide product according to claim 7, wherein the inorganic glassy material is a material having a bond represented by either M-O-M', M-O-M or M'-O-M', where M is at least one kind of element selected from the group consisting of titanium, zirconium, aluminum, silicon, germanium, indium, tin, tantalum, zinc, tungsten and lead; and M' is at least one kind of Group-13 element selected from the group consisting of boron, aluminum, gallium and indium.

9. The molded oxide product according to any one of claims 1 to 8, wherein the layer of the inorganic glassy material has a thickness of 50 nm to 10 μm from a surface of the molded oxide product.

10. The molded oxide product according to any one of claims 1 to 9, wherein the molded oxide product has a fine structure of 100 nm or more in dimension.

**11.** A process for producing the molded oxide product according to any one of claims 1 to 9, comprising the following steps A to D:

step A for preparing a precursor $R^2$-M-O-M', which has a polymerizable functional group-containing organic group $R^2$ and a M-O-M' bond, by elementary reaction represented by the reaction formula [2]

$$R^2\text{-M-Y} + \text{M'-OH} \rightarrow R^2\text{-M-O-M'} + \text{Y-H}\uparrow \qquad [2]$$

where $R^2$ is an organic group containing a polymerizable functional group; Y is an alkoxy group containing $C_1$-$C_{20}$ hydrocarbon or a halogen group; and M and M' are each independently at least one kind of element selected from the group consisting of aluminum, silicon, germanium, indium, tin, lead, phosphorus, boron, gallium, lithium, sodium, potassium, rubidium, cesium, beryllium, magnesium, calcium, strontium, barium, neodymium, praseodymium, erbium, cerium, titanium, zirconium, tantalum, zinc, tungsten, vanadium, chromium, manganese, iron, cobalt, nickel, copper and molybdenum;
step B for applying an application liquid containing therein the precursor;
step C for hardening the application liquid by thermosetting or photocuring, thereby forming a hardened product; and
step D for performing oxidation treatment on at least a surface layer of the hardened product in such a manner as to convert at least the surface layer of the hardened product to be of an inorganic glassy material.

**12.** The process for producing the molded oxide product according to claim 11, comprising: before or during the step C, forming a fine structure of 100 nm or more in diameter.

# FIG.1

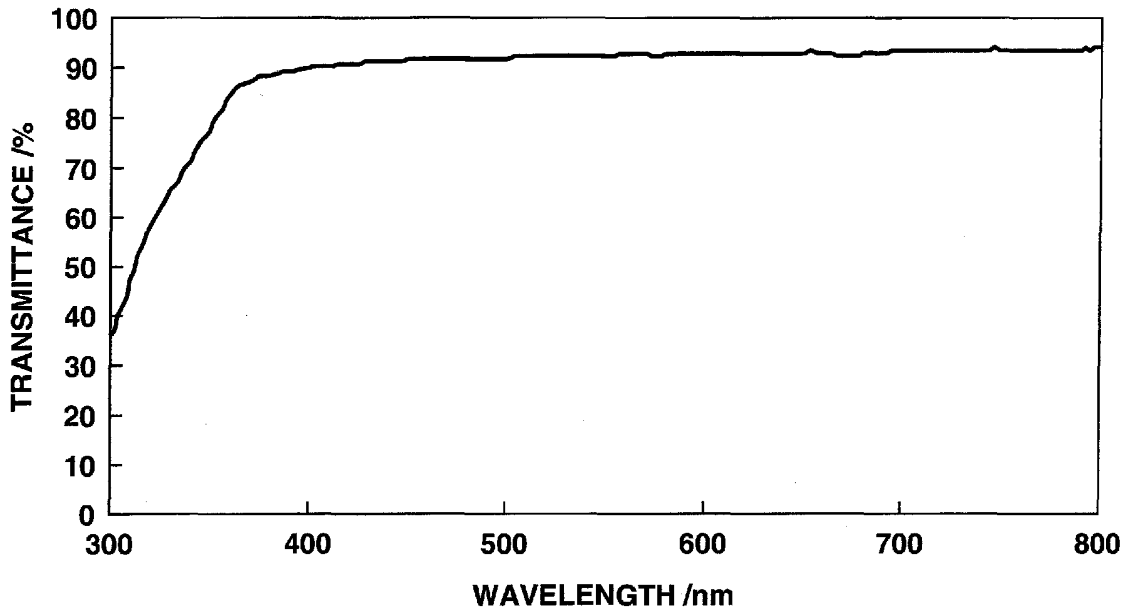
100
90
80
70
60
50
40
30
20
10
0
TRANSMITTANCE /%
300
400
500
600
700
800
WAVELENGTH /nm

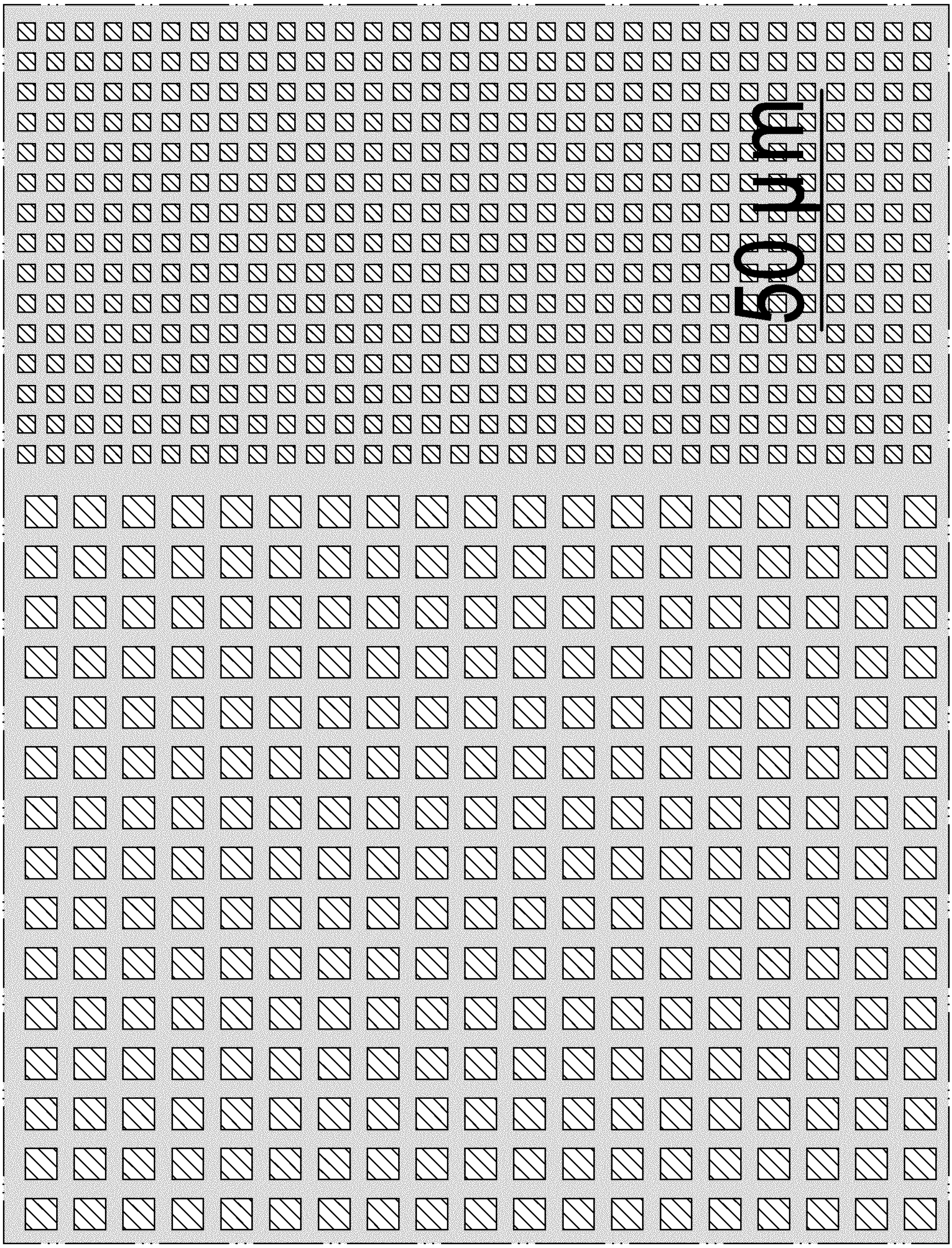


Fig. 2

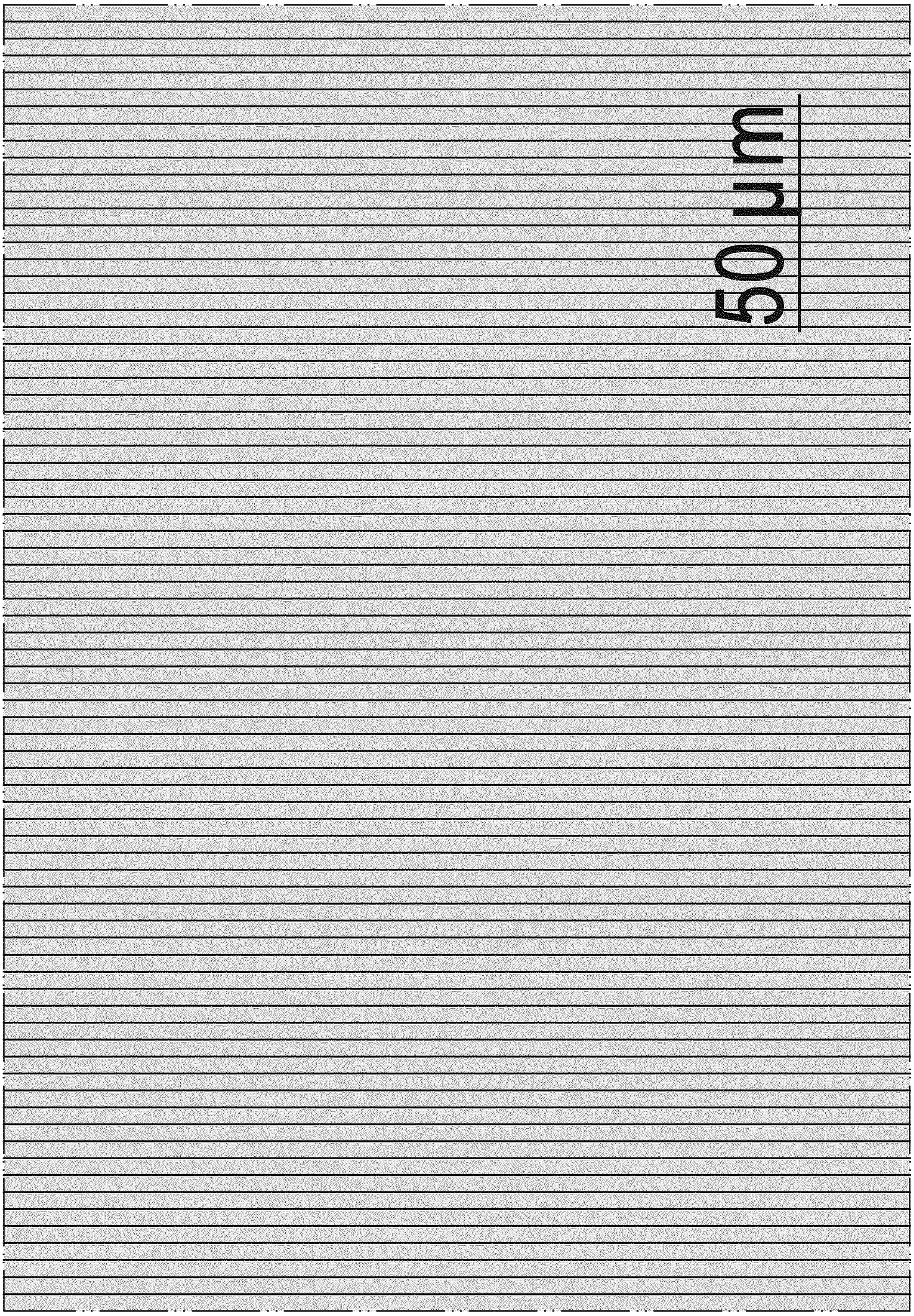


Fig. 3

**INTERNATIONAL SEARCH REPORT**

International application No.
PCT/JP2011/057278

A. CLASSIFICATION OF SUBJECT MATTER
*C01B13/32*(2006.01)i, *H01L21/316*(2006.01)i

According to International Patent Classification (IPC) or to both national classification and IPC

B. FIELDS SEARCHED

Minimum documentation searched (classification system followed by classification symbols)
C01B13/32, H01L21/316

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2009-120874 A (Dainippon Printing Co., Ltd.), 04 June 2009 (04.06.2009), paragraphs [0074] to [0076] (Family: none) | 1-12 |
| A | WO 2009/041479 A1 (Riken, Japan), 02 April 2009 (02.04.2009), paragraphs [0057] to [0060], [0076] to [0080] (Family: none) | 1-12 |
| A | JP 05-004839 A (Sumitomo Electric Industries, Ltd.), 14 January 1993 (14.01.1993), paragraphs [0013], [0014] & US 5368887 A & EP 0482659 A1 & KR 10-1994-0010090 B | 1-12 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 17 June, 2011 (17.06.11) | 28 June, 2011 (28.06.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

## INTERNATIONAL SEARCH REPORT

International application No. PCT/JP2011/057278

C (Continuation). DOCUMENTS CONSIDERED TO BE RELEVANT

| Category* | Citation of document, with indication, where appropriate, of the relevant passages | Relevant to claim No. |
|---|---|---|
| A | JP 01-257123 A (Hisatoshi ASAOKA), 13 October 1989 (13.10.1989), examples & US 5064629 A & EP 0490543 A3 | 1-12 |
| A | JP 61-083603 A (Director General, Agency of Industrial Science and Technology), 28 April 1986 (28.04.1986), examples & EP 0177198 A2 | 1-12 |
| A | JP 2004-266068 A (Ube-Nitto Kasei Co., Ltd.), 24 September 2004 (24.09.2004), paragraphs [0044], [0045] (Family: none) | 1-12 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000194142 A
- JP 2002270540 A
- JP 2004071934 A
- JP 4046963 B
- JP 3910101 B